Europäisches Patentamt

(19) European Patent Office

Office européen des brevets

(11) Publication number: **0 081 238**
**B1**

(12) **EUROPEAN PATENT SPECIFICATION**

(45) Date of publication of patent specification: **13.09.89**

(51) Int. Cl.⁴: **G 06 F 11/16**

(21) Application number: **82111353.7**

(22) Date of filing: **08.12.82**

(54) Multi-computer system.

(30) Priority: **09.12.81 JP 196858/81**
**09.12.81 JP 196855/81**
**20.01.82 JP 5963/82**

(43) Date of publication of application:
**15.06.83 Bulletin 83/24**

(45) Publication of the grant of the patent:
**13.09.89 Bulletin 89/37**

(84) Designated Contracting States:
**CH DE FR GB IT LI NL SE**

(56) References cited:
**GB-A-1 486 362**
**FTCS-11 - THE ELEVENTH ANNUAL**
**INTERNATIONAL SYMPOSIUM ON FAULT-**
**TOLERANT COMPUTING, 24th-26th June 1981,**
**Portland, Maine, pages 248-250, IEEE, New**
**York, US; R.J. EVANS et al.: "Fault tolerant**
**microprocessor system design"**
**IBM TECHNICAL DISCLOSURE BULLETIN, vol.**
**15, no. 4, September 1972, pages 1172-1173,**
**New York, US; E.J. FRANKLIN: "Software**
**synchronization of multiple computers"**

(73) Proprietor: **Hitachi, Ltd.**
**5-1, Marunouchi 1-chome**
**Chiyoda-ku Tokyo 100 (JP)**

(72) Inventor: **Ito, Akio**
**1-36-7-105, Nishinarusawa-cho**
**Hitachi-shi Ibaraki-ken (JP)**
Inventor: **Mizoguchi, Tsutomu**
**2498, Kuji-cho**
**Hitachi-shi Ibaraki-ken (JP)**
Inventor: **Kanzaki, Hideo**
**1534-8, Shirakata Toukai-mura**
**Naka-gun Ibaraki-ken (JP)**
Inventor: **Hayakawa, Hirohisa**
**203, Mihashi Bldg. 577-1, Shinjuku**
**Hiratsuka-shi Kanagawa-ken (JP)**
Inventor: **Kimura, Koichi**
**5-10-7, Johnan-cho**
**Hitachi-shi Ibaraki-ken (JP)**
Inventor: **Aotsu, Hiroaki**
**8-10, Yanagigaoka**
**Nakaminato-shi Ibaraki-ken (JP)**

(74) Representative: **Schulz, Rütger, Dr. et al**
**Strehl Schübel-Hopf Groening Schulz**
**Patentanwälte Maximilianstrasse 54 Postfach 22**
**14 55**
**D-8000 München 22 (DE)**

# EP  0 081 238  B1

(56) References cited:
**PATENTS ABSTRACTS OF JAPAN, vol. 7, no.
198 (P-220)1343r, 2nd September 1983; & JP -
A - 58 97 764 (HITACHI SEISAKUSHO K.K.)
10-06-1983**

## Description

### Background of the invention

This invention relates to a multi-computer system comprising dual system buses and plural sets of dual units, each of which consists of two computers which are effectively connected to each of said system buses and which carry out an identical processing.

In plants or systems wherein devices to be controlled or operated are located in relatively remote positions and wherein it is desirable to monitor conditions of the respective devices and then to control them from a central operation room, a multi-computer system is often used for performing that control. The multi-computer system is constituted such that a transmission bus is provided between the respective devices and the operation room and computers are disposed at desirous positions on the bus, whereby information is transmitted among the computers and the devices are controlled or operated by instructions from the computers. This control system is widely adopted, but it has encountered such a problem that the plants or systems will be brought into total shutdown due to troubles in the transmission bus. Moreover, since there is some casual relation among the devices in the manufacturing plants or system, troubles in the respective computers make the plants or systems unstable in their operating states, and in worse cases the operation must be cut down or stopped.

Therefore, multiplication of the multi-computer (referred to as multi-CPU hereinafter) system has been studied, and it is resulted that a DUAL multiple system is more preferable than a stand-by DUPLEX system for the purpose of improviing reliability during the operation. However, it is very difficult to realize a dual multicomputer system. A strong reason for such difficulty is in that synchronization between a pair of dualized CPU's as well as that among other dual CPU pairs must be effected. It is a matter of course that a dual system is to carry out the identical arithmetic operation based on identical inputs and then issue outputs simultaneously, therefore synchronization among CPU's is indispensable. But the detailed study of synchronization in the dual multi-CPU system will lead to a result such that a device specially for the synchronization becomes to have a relatively larger scale than other parts of the CPU. In addition, it is required for the dual system to be able to continue its operation and hence to improve availability even when there occur troubles in any section of the system.

### Summary of the invention

In view of the foregoing situation, an object of the present invention is to provide a multi-CPU system which has been realized by using a simple synchronizing device.

This object is achieved by a multi-computer system specified above in which at least one of the dual units includes an information exchange bus provided between the two computers, the first computer in said one of the dual units sends a command signal to the second computer of said dual unit through said information exchange bus, the second computer sends a response signal to the first computer through said information exchange bus upon receiving said command signal, the first computer receives input signals and computes these signals immediately after receiving said response signal, at a predetermined time after sending the response signal the second computer receives input signals and computes signals, said predetermined time taking into account the transmission time of the response signal from the second computer to the first computer such that the first and second computers are synchronized, and that said first computer and said second computer send computed signals to the other dual units through said system buses.

Preferred embodiments of the invention and especially a multi-CPU-system which can continue the operation through a change in configuration of the control system and which can be restored the normal operation easily in case of trouble are given in the subclaims.

In the multi-computer system of the invention a bus is provided between the dual CPU's of each pair, so that signal input and output processing is synchronized through sending and receiving of signals using the bus. One pair of CPU's starts its operation, while other pairs of CPU's are started upon receiving a signal from the system bus.

Receiving of signals by the CPU pairs from both buses is switchable therebetween, and if the signals sent through one bus are not received duly, the bus is switched over from one to the other.

### Brief description of the drawings

Fig. 1 is a block diagram showing schematic configuration of a multiplicate multi-computer system according to this invention;

Figs. 2(a) and 2(b) are flow charts showing the content of processing by CPU's CA1 and CB1 within a dualized unit D1;

Fig. 3 is a flow chart showing a part of processing for input and output synchronization out of the processing shown in Fig. 2;

Fig. 4 is a chart showing the exchange of signals through a bus E1 and the input and output conditions of the CPU's CA1 and CB1; in which Fig. 4(a) is a chart showing the case CB1 falls into the down state from a dual mode and Fig. 4(b) is a chart showing the case CA1 falls into the down state from a dual mode;

Fig. 5 is a chart showing signals on the bus E1 and the input and output conditions of CA1 and CB1, when CB1 is restored by using the bus E1;

Fig. 6 is a flow chart showing processings by both dualized units D2 and D3;

Fig. 7 is a detailed flow chart showing a part of Fig. 6 adapted to transmit signals to system buses;

Fig. 8 is a detailed chart of a part of Fig. 6 showing procedures of processing used when restoring a single mode to a dual mode;

Fig. 9 is a chart showing how to change the system and continue the operation when there occur troubles in some section of the system; in which Fig. 9(A) is a view showing configuration of the system in the normal state, Fig. 9(B) is a view showing configuration of the system with CB1 falling in the down state and D1 performing a single mode, Fig. 9(C) is a view showing configuration of the system with CA3 falling in the down state, and Fig. 9(D) is a view showing configuration of the system with CA3 falling in troubles of sending.

Detailed description of the preferred embodiment

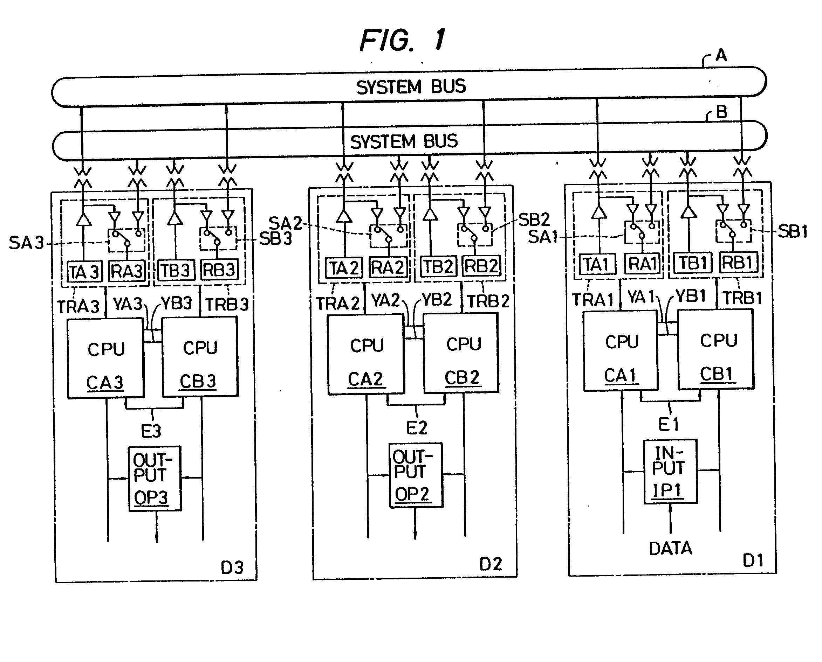

Fig. 1 is a block diagram showing schematic configuration of the system according to one embodiment of this invention, and a dual system is illustrated by way of an example. The reference symbols A and B denote first information exchange means (referred to as system bus) which perform the exchange of information among the respective CPU's, and the symbols D1, D2 and D3 denote dualized processing units, respectively. In the illustrated embodiment, the unit D1 has a function to perform input data taking-in processing, while the units D2 and D3 have a function to perform processing of data output to the exterior. In the respective units D1, D2 and D3, TRA1, TRA2, TRA3, TRB1, TRB2 and TRB3 denote sending/receiving sections, CA1, CA2, CA3, CB1, CB2 and CB3 denote CPU's. IP1 denotes an external data input section, and OP2 and OP3 denote output sections. In the respective sending/receiving sections, TA1, TA2, TA3, TB1, TB2 and TB3 denote transmitters, RA1, RA2, RA3, RB1, RB2 and RB3 denote receivers, and SA1, SA2, SA3, SB1, SB2 and SB3 denote change-over switches. In this manner, the sending sections of each dualized unit are fixedly connected to either one of the system buses, while the receiving sections thereof are switchably connected to both system buses. More specifically, in the normal state the change-over switches SA1, SA2 and SA3 are connected to the system bus A, and when the system bus A falls into troubles, signals are received from the system bus B. On the other hand, the change-over switches SB1, SB2 and SB3 are connected to the system bus B in the normal state, and when the system bus B falls into troubles, signals are received from the system bus A. Therefore, in the normal state sending output from CA1 to the system bus is transmitted as follows; CA1 → TA1 → A → respective receivers RA2, RA3 → respective CPU's, CA2, CA3, and sending output from CB1 to the system bus is transmitted as follows; CB1 → TB1 → B → respective receivers RB2, RB3 → respective CPU's CB2, CB3. Meanwhile, sending output from CA2 is transmitted as follows; CA → TA2 → A → respective receivers RA1, RA3 → respective CPU's CA1, CA3, and sending output from CB2 is transmitted as follows; CB2 → TB2 → B → respective receivers RB1, RB2 → respective CPU's CB1, CB3. In this way, a broadcasting system is adopted in the illustrated embodiment as an information exchange system through system buses, in which all of the CPU's connected to the same bus is able to receive the identical sending data simultaneously.

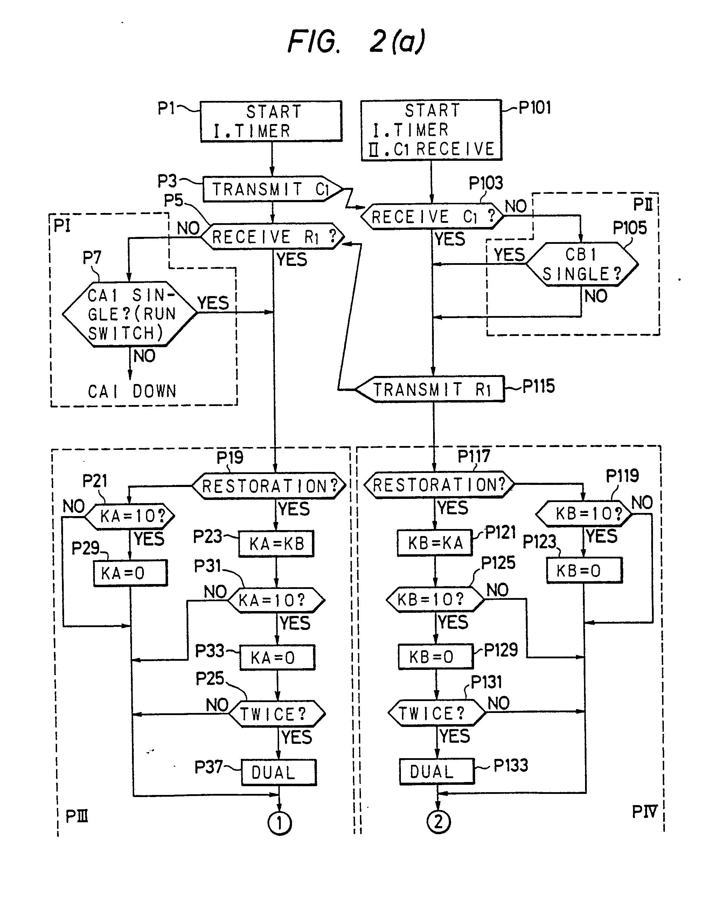

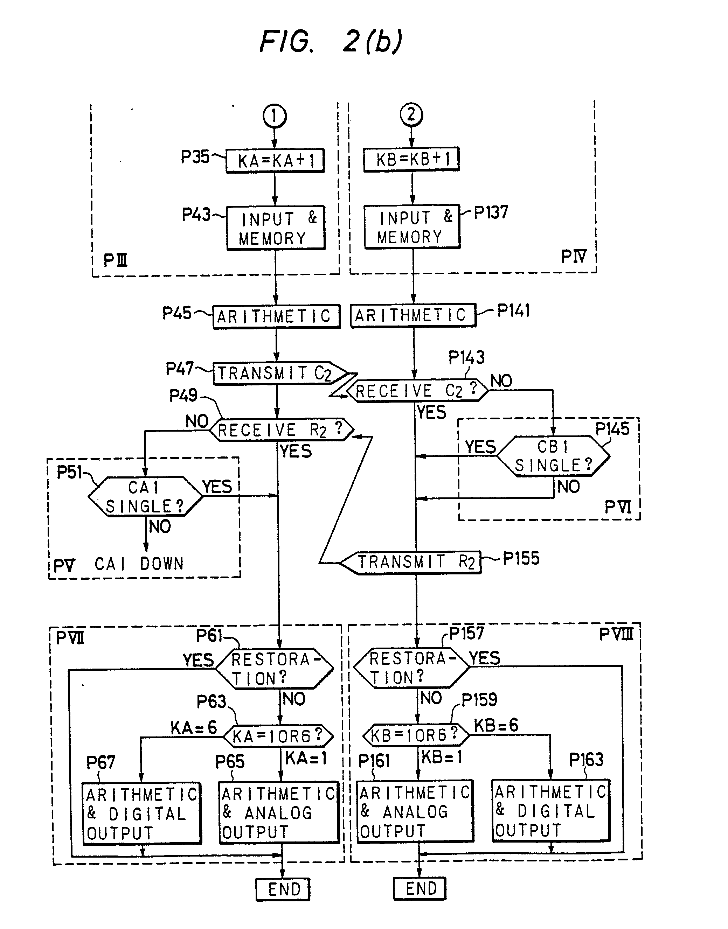

According to this invention, a second information exchange means E is provided in each of the plural dualized units. Moreover, each dualized unit includes therein RUN monitoring lines YA and YB which serve as means to surely detect the occurrence of troubles in the information exchange means E. Among the plurality dualized units D1 functions to generate clock pulses for the overall system, that is, to effect synchronization of the system. Fig. 2 shows a processing flow of the dualized unit D1 including the second information exchange means E1.

Total processing flow of the dualized unit D1

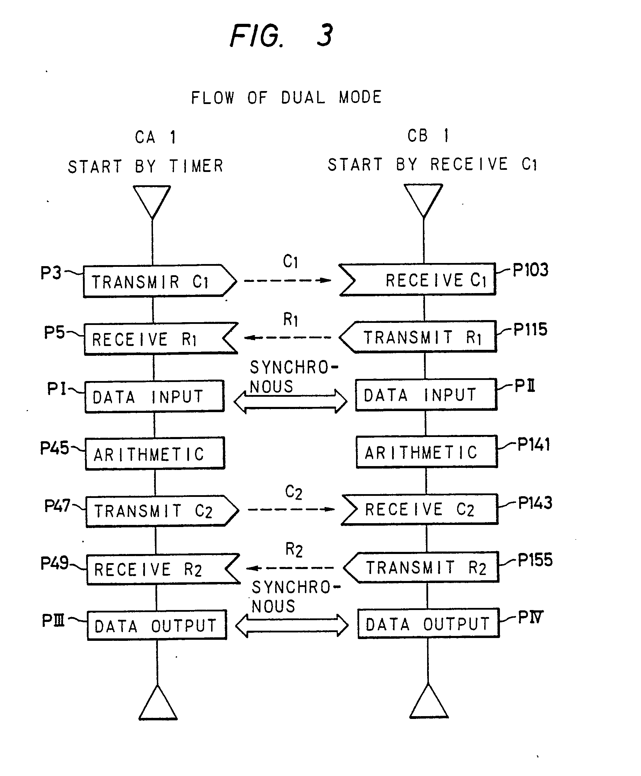

Referring to Fig. 2, the left-hand half of the chart represents the processing flow for the CPU CA1 and the right-hand half thereof represents the processing flow for the CPU CB1. Outlines of these processing flows will be now described. Steps P1 and P101 designate the kind of starting signals for CA1 and CB1, respectively. CA1 is started in a normal manner by a timer (not shown) which outputs a clock pulse, for example, for each 20 (m sec). CB1 is also capable of being started by a timer similar to CA1, but it is normally started upon receiving a command signal C1 through the bus E1. Therefore, CB1 is started following CA1 in the normal dual operation state. Steps PIII and PIV denote the processing flows for signal input, and the processing for synchronizing the signal input is denoted at steps P3, P5, P103 and P115. Steps PVII and PVIII denote the processing flows for signal output, and the processing for synchronizing the signal output is denoted at steps P47, P49, P143 and P155. Steps PI and PII function to detect that the other system falls into the down state and hence its own system comes into a single mode. The processing steps PIII, PIV, PVII and PVIII for input and output will be described later in detail, and the processing flow for the dual operation state will be now described. In this state the programms PI and PII for anomaly decision will not be executed, so the flow can be represented as Fig. 3.

Dual mode operation of the dualized unit D1

An operation mode in the normal state is described by referring to Fig. 3. First, the CPU CA1 is started to execute the program by a timer (not shown) for each constant period T1, and it sends a command signal C1 to the bus E1 in the step P3. The CPU CB1 receives the signal C1 (in the step P103) through the bus E1 to be started upon this, and it returns a response signal R1 to the CPU CA1 in the step P115 through the bus E1. Since a transmission time from CB1 to CA1 is noticeable in advance, CB1 starts to perform the external data taking-in processing (step PII) after returning the response signal R1 in consideration of such transmission time. Meanwhile, CA1 starts to perform the external data taking-in processing (step PI) immediately after receiving the signal R1. Through a serial exchange of these command signals C1 and R1, timings of taking in the external data are made the same for both CA1 and CB1, and hence it becomes possible that the entire system D1 takes in the identical data from the exterior.

Then, the respective CPU's CA1 and CB1 process the input data in steps P45 and P141, and CA1 sends a command signal C2 again (step P47) to CB1 through the bus E1. Upon receiving the signal C2 (step P143), CB1 sends a response signal R2 (step P155) to CA1. Similarly to that as previously noted, through transmitting of the response signal R2 from CB1 (step P155) and receiving of the signal R2 by CA1 (step P49), the next data output processings (PIII, PIV) are synchronized and data are discharged to the system buses through the transmitters TA1 and TB1. As a result, it is possible to send out the synchronous data to the system buses A and B.

Occurrence of anomaly in the dualized unit D1 and single mode operation

Now it will be assumed that either one of CA1 and CB1 falls into the down state in the foregoing operation state. On the side of CA1, the response signal R1 in accordance with the command signal C1 sent from CA1 in the step P3 can not be obtained. The step P7 serves to retrieve the presence or absence of a flag which indicates the single operation with CA1 only. More specifically, the state of a run switch in CB1 (turning to ON in the program driving state) is checked to decide whether the single mode operation with CA1 only is performed or not. If CB1 falls in the down state, the flow will be continued to the subsequent processing on the decision that the single mode operation with CA1 is performed. If CB1 is sound, CA1 stops its own operation based on the decision that there occurs an anomaly in the bus E1. On the other hand, CB1 also makes a similar decision in the step P105. If CA1 falls in the down state as a result of monitoring a run switch in CA1, the single mode operation with CB1 will be started. Also when the run switch in CA1 indicates that CA1 is sound, the flow will be followed by the single mode operation with CB1 similarly. This is resulted from a solution to such a problem that the above condition is caused by an anomaly in the bus E1 and the asynchronous operation will be occurred if both CA1 and CB1 are operated in such condition, txbrefore CA1 and CB1 receive different inputs from each other. As previously noted, the operation of CA1 is forcedly stopped in the step P7, so that the single mode operation with CB1 is performed. After the input processings PIII, PIV and the arithmetic processings P45, P141, output is now synchronized through the steps P47, P49, P143 and P155. At this time, the decision on the single mode operation or not is also made in the programs PV and PVI. Since the processing for this decision is the same as that in PI and PII, the description thereabout is omitted herein. Besides, P7 and P105 correspond to P51 and P145, respectively. After such decision processing, the flow comes to the output processings PVII and PVIII.

In this way, starting of the single mode operation is confirmed with the aid of exchange of the command signals C1, C2 and the response signals R1, R2 through the bus E1 as well as the RUN monitoring lines YA1 and YB1. In this connection, even if the operation turns to a single mode, the processing of the input and output processing programs PIII, PIV, PVII and PVIII remain the same as that in the dual mode operation. This will be easily understood upon reading the later-stated description about input processing. Though there has not been specially mentioned, it is a matter of course that each CPU monitors its own processing at all times and then stops its operation upon the occurrence of an anomaly.

Signal input and output processing in the dualized unit D1

In Fig. 2, since the input processing PIII and the output processing PVII are completely identical to PIV and PVIII, respectively, the processings PIII and PVII will be described herein by way of examples. In these programs, the symbol KA (or KB) denotes a pointer indicating the address of a memory which stores an input signal. In a dual or single mode, the step 21 serves to decide whether KA equals to 10 or not. When KA assumes 10, KA is cleared to 0 in the step P29, while in other cases KA is incremented in the step P35; KA=KA+1. Therefore, KA is updated while being incremented for each processing and then returned to 0 when it reaches 10. After that, KA is duly incrementd again. Then, in the step P43 analog and digital data are input to the address of a memory which then the pointer KA indicates. In the program PVII for output to the system buses A and B, the step P63 serves to decide whether KA is 1 or 6. When KA assumes 1, arithmetic operation is performed in the step P65 based on the input analog data and the consequent analog data is output to the system bus. When KA assumes 6, arithmetic operation (such as OR operation) is performed in the step P67 based the input digital data and the consequent digital data is output to the system bus. Now assuming that starting by the timer is effected at a period of 20 msec. for example, data input is performed for each 20 msec, and the analog data and the digital data are output to the system bus alternately for each 100 msec. Herein the term of digital data means a signal which can be presented in the form of ON or OFF similarly to a switch which assumes the opened or closed state only, while the term of analog data means a signal which has the magnitude and signs similarly to outputs from various sensors. But, it is a matter of course that the analog signal has been coded before processing in each CPU or transmitting. Furthermore, as will be apparent from the later-stated description, values of both pointers KA and KB coincide with each other in the dual mode operation state. In this manner, it is possible to perform the identical arithmetic operation based on the identical input which is obtained at the same time, and then to output the identical value to the two system buses at the same time.

### Output conditions of respective sections in the dualized unit D1

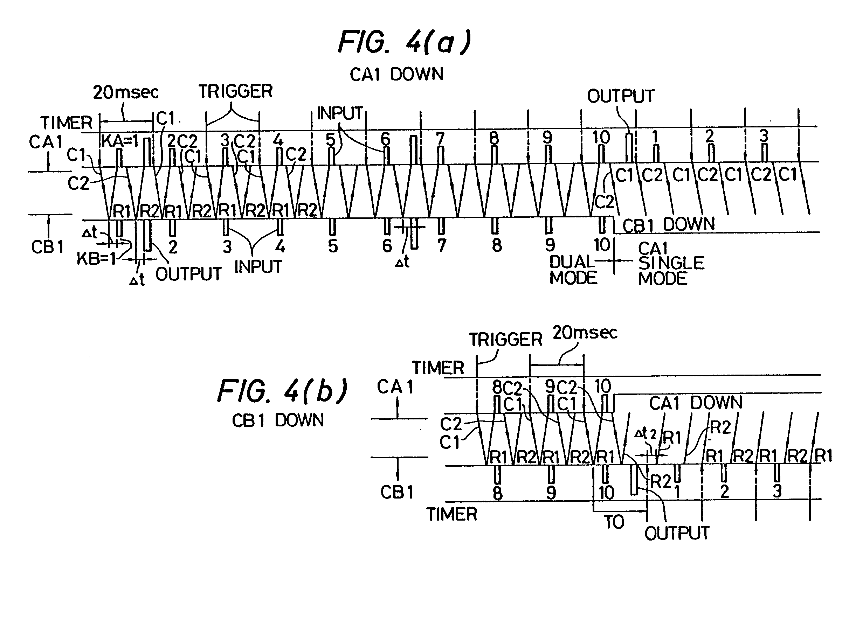

Fig. 4 is a chart showing signals in respective sections of the dualized unit D1. Fig. 4(a) shows the dual mode operation state as mentioned above and the single mode operation state where either one system (CB1) falls into the down state from the dual state. As will be clear from the drawing, CB1 performs the processing delayed from the receiving time of C1 or C2 by a transmission time $\Delta t$ through the bus E1, so that input and output timings are synchronized between CA1 and CB1. In this case, CB1 which is started upon receiving the command signal falls into the down state and CA1 is started by a trigger signal from the external timer irrespective of whether CB1 falls into the down state or not, whereby a processing period of CA1 itself is never fluctuated. In the case of Fig. 4(b) where CA1 falls into the down state, CB1 which has been started upon receiving C1 is now started by a back timer. In the dual mode operation state, the back-up timer in CB1 is driven upon receiving the command signal C1 (or C2) and then outputs the trigger signal To therefrom. Since output timing from the back-timer is selected to be a little later from the receiving time of C1, CB1 will be never started by output from the timer in the dual mode operation. CB1 is started by the timer when CA1 falls into the down state and hence C1 is not received by CA1, and it transmits the response signal R1 after a lapse of a processing time $t_2$ by the program PII. Thereafter, the operation turns to a single mode with CB1 only, so that CB1 sends out R1 and R2 to the bus E1 alternately and processing is proceeded with a processing period intrinsic to the back-up timer. A processing period is varied to some degree through a transition from the main timer in CA1 to the back-up timer in CB1, but this variation may not produce any influence on control of the plant.

### Restoration of the dualized unit D1

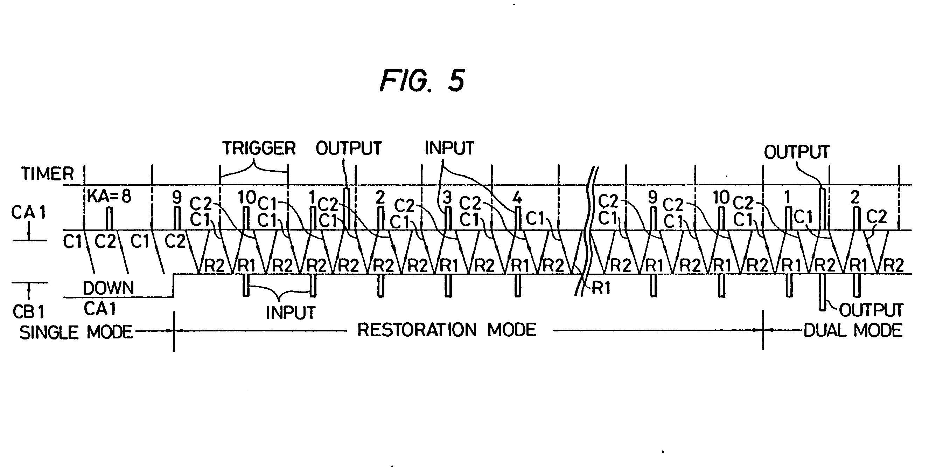

Hereinafter processing for restoring the repaired CPU to effect the dual mode operation will be described by referring to Fig. 5. Fig. 5 show the case that the single mode operation with CA1 turns to the dual mode operation. When CB1 comes into a restoration mode at an arbitrary time, CB1 is started and then waits for receiving the command signal C1. Upon receiving C1, CB1 comes into the original processing, that is, the step P115, and it transmits the response signal R1. Through the exchange of these signals C1 and R1, input processings in the steps PIII and PIV of both systems are synchronized as previously noted. But, since the content of a memory in CB1 which has been in the stopped state up to that time does not coincide with the content of a memory in CA1, it is required to make both the contents coincident with each other. The step P117 serve to detect that CB1 is in a restoration mode, and then the flow enters into the step P121 where a value of the pointer KB indicating the address of a memory which stores the input signal, is made coincident with that of the pointer KA in CA1. On this occasion, the value of the pointer KA in CA1 has been received by CB1 as a part of the command signal from CA1, so that storage locations of the input signal can be made coincident for both systems. Then, the steps P125, P129, P131 and P133 serve to detect that the contents stored in KB from 1 to 10 were made coincident, and to return to the dual mode operation. More specifically, it is first decided in the step P125 whether KB assumes 10 or not. If KB is not 10, the flow comes into the stpe P137 to start the input processing. If KB equals to 10, KB is turned to 0 and the flow enters into the step P131. If KB assumes 10 twice, the step P133 functions to decide that the system has come into the dual state, and upon this the operation is turned to a dual mode. At the time of deciding the presence of dual state, a restoration mode is released. The input processing by the step P137 will be continued until KB assumes 0 twice. As clear from the foregoing description, if a pointer for C1 or R1 is 1, a pointer for the input address assumes 2. The next pointer for C1 or R1 becomes 2. Besides, one CPU under the single mode operation monitors the number of times for the pointer to assume 10 after receiving a signal from the other CPU, and then it decides that the dual state has been established, when the monitored number becomes two. In a restoration mode, although the processing routes are somewhat different between PIII and PIV, this is a small time difference and hence the respective CPU's can receive the identical input at substantially the same time. For output to the system bus, output timings are synchronized through the steps P47, P143, P49 and P155, but in a restoration mode the output processing through the steps P161 and P163 is dispensed with by the step P157. When the step P133 has decided that the dual state has been established, analog output is effected with KB assuming 1 and digital output is effected with KB assuming 6, respectively. Then, turning to the case that CA1 is restored from the single mode operation with CB1 only, the flow is almost the same as that for restoring CB1 and hence the detailed description will be omitted. Both cases are different in that CB1 waits for receiving the command signal C1 in a restoration mode for restoring CB1, while CA1 waits for receiving the response signal R1 in that for restoring CA1. However, R1 includes the pointers KB of CB1 and CA1 remains in the stand-by state to make the pointer KA coincident with the pointer KB until the pointer KB assumes 10. CA1 is started again by the timer and CB1 is started again upon receiving the command signal when KB assumes 10. But CA1 still remains in a restoration mode even after undergoing the timer starting, and the operation turns to a dual mode when the step P25 outputs a "yes" signal.

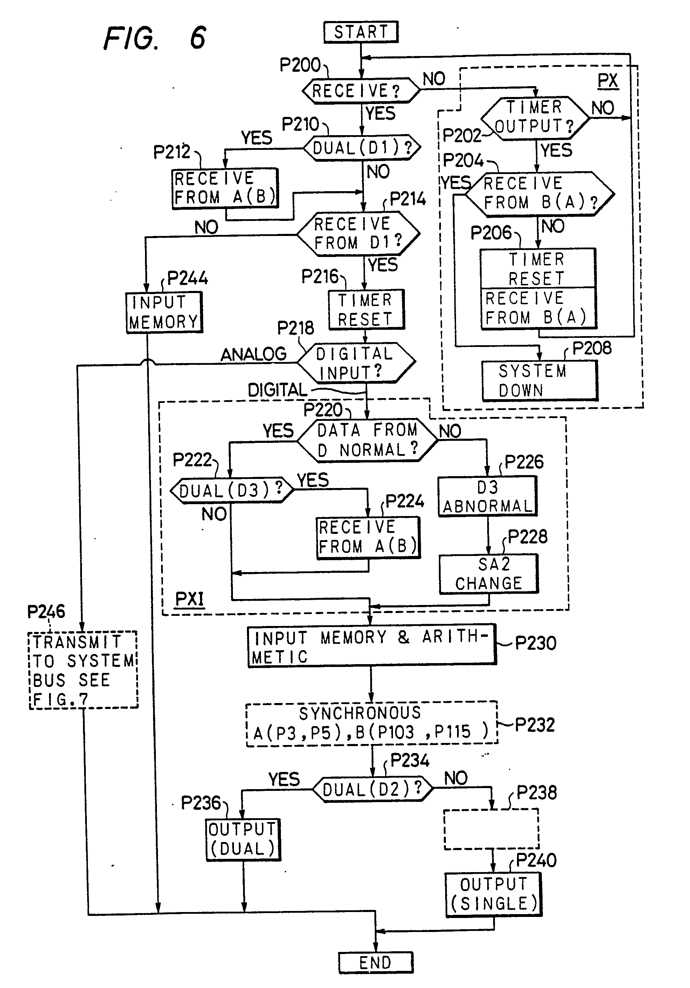

Fig. 6 is a flow chart showing the contents of processings by the CPU's in the dualized units D2 and D3, and these CPU's are started upon receiving a signal from the system bus A or B. An outline of this program will be now described.

The symbol PX denotes processing to detect and cope with an anomaly on the side of the dualized unit D1, while if the program is for D2, PXI denotes the processing to detect and cope with an anomaly on the side of the dualized unit D3. The step P232 denotes processing to effect the synchronization when the data are output through the output sections OP2 and OP3 to the objectives to be controlled. P238 denotes a processing program to make the content stored in the other CPU with that stored in one CPU, when the other CPU is restored. P246 denotes a processing program to output the data to the system bus A or B. Except for the step P248, the contents of processing are almost the same between CA3 and CB3 and between CA2 and CB2 as shown in Fig. 6. So the processing by CA2 will be described hereinafter by way of an example, and a difference point in the processing by CB2 will be clarified each time it will be appeared.

Sound dual operation state As is apparent from the description the output processing steps PVII and PVIII shown in Fig. 2(b), the CPU's CA1 and CB1 in the dualized unit D1 output the data to the system buses A and B in synchronism with each other, and these data are received by two pairs of CPU's in the dualized units D2 and D3 simultaneously. CA2 and other CPU's start to perform the following processing after the receiving of data has been confirmed in the step P200. When the data is received in the step P200, the step P210 is then started confirm the presence of a flag which indicates that the dualized unit D1 in the dual state. When the unit D1 in the dual state, the receiving switch SA2 is connected to its onsystem side (i.e., the system bus A because CA2 is cited as an example herein) in the step P212. Therefore, as far as the dual state is continued, SA2 remains connected to the side of the system bus A. Besides, the term of its own system side for CB2 means the side of the system bus B. In this connection, the flag indicating the dual state of D1 is included in the data sent from D1 through the system bus, and whether D1 is in the dual state or not is discriminated based on analysis of the flag. As described later, the system bus is used to transmit signals from D1 as well as signals from D2 or D3, so the step P214 functions to discriminate that the received data come from D1 or D3. If the data comes from D3, the input data is memorized in the step P244 and processing in this timing will be terminated. If the data comes from D1, a timer (not shown) is reset in the step P216. This timer is uzhuto output a trigger signal for each 100+α (ms), for example, after resetting. As previously stated referring to the steps PVII and PVIII in Fig. 2(b), CA2 receives the signals at a period of 100 ms if the unit D1 is sound, so that the timer can be reset in the step P216 before issuing output therefrom with such timer setting. PX is a program which functions to decide that there occurs an anomaly in D1 when CA2 can not receive any data for a period of time longer than 100+α (msec) and the timer issues output therefrom. This will be described later in more detail. As mentioned above, digital data and analog data are received from the system buses A and B alternately at a period of 100 (ms), but the content of processing is different for each data. In the step P218, the kind of the data is decided. If the received data is analog data, the flow comes into the step P246 to transmit signals to both the system buses A and B, while if that is digital data, processing of PXI and the subsequent steps will be performed.

Processing with respect to digital input

Soundness of the dualized unit D3 is first checked by the program PXI, but this description can be understood more easily after reading the description of the step P246 and hence it will be omitted herein. In the step P230, the digital data obtained from the dualized unit D1 through the system causes A and B are memorized, and then the predetermined arithmetic operation is performed based on the digital data and the analog data obtained 100 msec in advance. It is a matter of course that the content of such arithmetic operation is completely the same between CA2 and CB2 and between CA3 and CB3. In the step P232, a pair of two CPU's CA2 and CB2 in the dualized unit D2 are synchronized using the bus E2. This synchronization is effected by the same technique as that which has been described referring to Fig. 2(a). More specifically, CA2 includes the steps P3 and P5, while CB2 includes the steps P103 and P115. And synchronization between CA2 and CB2 is effected through sending/receiving of the command signal C1 and sending/receiving of the response signal R1 in accordance with such exchange of C1. Through sending/receiving of the signals C1 and R1, it is also confirmed that CA2 and CB2 are in the dual state. If the dual state between CA2 and CB2 is confirmed in the step P234, the step P236 is started to issue output for a dual mode. In other words, coincident output between CA2 and CB2 is taken out in the output section OP2 and then issued. The foregoing description out the dual state will be now summarized by referring to Fig. 1. In CA1 and CB1 of the unit D1, simultaneous sampling of input is performed using the bus E1 to obtain the identical value, and then the identical output is also obtained as a result of the identical arithmetic operation. This output is transmitted to both system buses A and B at the same time using the bus E1, and the CPU's in the dualized units D2 and D3 are started upon receiving thus transmitted output from the unit D1. Such starting is effected at substantially the same time between CA2 and CB2 and between CA3 and CB3, and then the resulted outputs based on the identical arithmetic operation also become identical to each other. These output timings are synchronized by using the bus E2 or E3, so that single true output is issued from the output section OP2. Consequently, it will be understood that the entire system shown in Fig. 1 can be synchronized, even if a distance between the units D1 and D2 is relatively large.

## Processing with respect to analog input

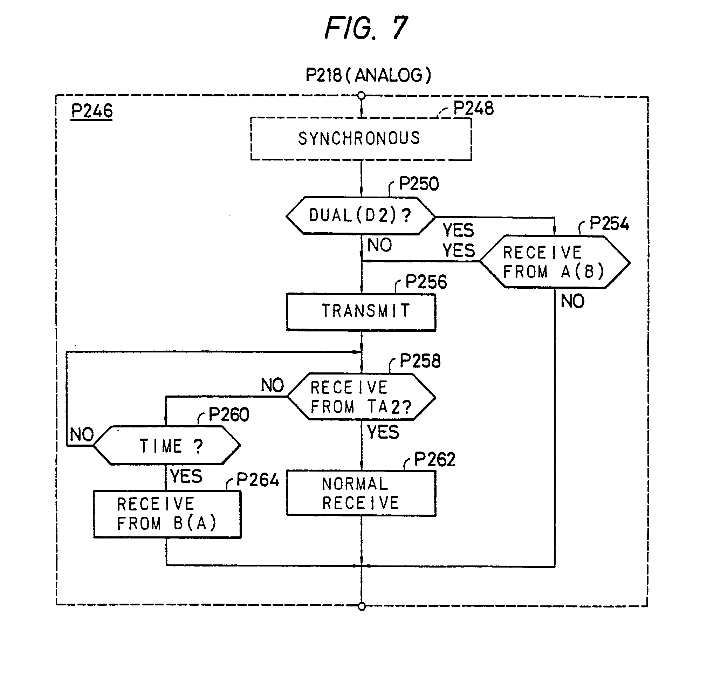

As mentioned above, in the case of digital input processing is performed to issue output to the controlled objectives, while in the case of analog input processing is performed to transmit signals to the system buses A and B in the step P246. Referring to Fig. 7, there is shown a detailed flow chart for such processing, in the step P248 synchronization is first effected by using the bus E2 similarly to the step P232 in Fig. 6. The step P250 functions to decide that CB2 and CA2 are in the dual state, and if the are in the dual state, the flow comes into the step P254. Then, the receiving switch SA2 is connected to the side of the system bus A in the dual state, so signals are transmitted to the system bus A in the step P256. This signal transmitting is synchronized through the step P248. The step P258 has function to confirm that signals are sent out from the transmitter TA2 correctly. This is decided upon that output from the transmitter TA2 can be received through the receiving switch SA2. Based on this receiving, it is decided in the step P262 that the receiving is normal. In this connection, since D2 as well as D3 transmit signals to the system buses in the case of analog data, timings of sending out the signals from D2 and D3 are shifted appropriately.

As is clear from the foregoing description, utilized conditions of the system buses A and B shown in Fig. 1 are as follows. Transmitting of information from D1 to D2 and D3 is performed at a period of 100 msec, and both analog and digital data are output alternately. A time period of 100 msec after the digital signal is received by D2 and D3, is used to perform various arithmetic operations based on the input and to output thus resulted data to the objectives to be controlled. Transmitting of information from D2 and D3 is performed in a time period of 100 msec after receiving the analog signal.

In such a manner, the dual mode operation will be continued. Hereinafter, there will be described a method to detect an anomaly in the dualized units D2 and D3 and a countermeasure to cope therewith, when there occur an anomaly in some section of the system shown in Fig. 1.

## Processing in D2 with the dualized unit D1 falling in shutdown

This case is that either one of CA2 and CB2 (assuming CA2 herein) has become incapable of receiving any signal from the system bus due to that either one of CA1 and CB1 fell in the down state, or due to that either one of the paired system buses fell in the down state. Such failure in receiving is detected by the program PX shown in Fig. 6. First, there can be received no signal in the step P200 from the system bus A. This state is detected by the step P202 from the fact that it has lapsed a time period of 100+a (msec) set for the external timer (not shown) which has been described hereinabove referring to the step P216, and then the flow shifts to the step P204. In this case, since either one system falls into the down state from the dual mode operation, the receiving switching SA2 shown in Fig. 1 is connected to its own system a side and hence the flow comes into now the step P206). In the step P206, the switch SA2 is changed over to be connected to the other system B side and the aforesaid timer is reset. As a result, when D1 comes under the single mode operation with CB1 only, both CA2 and CB2 in D2 are started upon receiving the command signal from the system bus B and then performs the subsequence processing based on inputs therefrom. D3 is brought into the same state as that in D2. Besides, when CA1 and CB1 in the dualized unit D1 fall into the down state, though with a very small probability, any signal can not be received during the subsequent processing after a lapse of 100 msec and the flow comes into the step P204. But the switch SA2 is already connected to the other system B side, and finally the entire system shown in Fig. 1 falls into the down state in the step P208.

The processing route shown in Fig. 6 in the case where the switch SA2 is connected to the B side due to an anomaly in the A system is different from that in the case of the previous dual state as follows. Firstly, the step P210 serves to detect that D1 is not in the dual state. This is detectable based on an analysis of the received signal from the system bus as previously noted. The unit D1 promptly informs of that it is not in the dual state, in the case of anomaly in CA1 or CB1 as well as in the case of failure in the system bus A or B. At this time, the flow shifts directly to the step P214 not through the step P212, so that the receiving switch SA2 remains connected to the side of the other system B through the step P206. A second different point is in the processing to transmit signals to the system buses, as shown in Fig. 7. Since D1 is under the single mode operation but D2 is under the dual mode operation, the flow shifts from the step P250 to the step P254. At this time, however, the receiving switch SA2 is connected to the side of the other system B, so that the flow turns to the end directly. In other words, it is meaningless to transmit signals to the system bus A when there occurs an anomaly in the bus A.

If D1 is restored to a dual mode in such state, both CA1 and CB1 sent out to the system bus a signal including a flag which indicates "D1, DUAL". Since CA2 and CA3 receive signals from the system bus B, they can notice restoration of D1 into the dual state and then the receiving switch SA2 is changed over to be connected to the side of its own system A through processing of the step P212. The step P254 in Fig. 7 shifts the processing flow to the step P256 naturally. As a result, the entire system shown in Fig. 1 is restored to the desired dual state.

## Processing in D2 with the dualized unit D3 falling in failure

Even if signals from D3 are stopped due to a failure in D3, the processing route as shown in Fig. 6 still remains basically unchanged from that in the foregoing dual state and only a part of the processing route in the program PXI is changed, description of which program was omitted hereinbefore. Such basic unchange in the processing route is obvious from the fact that all of judgements at the respective branch points in Fig. 6 are made based on information from D1 or the states of D2 itself. The program PX1 is to detect an anomaly in D3 from D2, and such anomaly is detected based on the data sent out from D3 to the system bus. More specifically, the information from D3 is normally stored in the step P244, but when the flow comes into the step P220, defect or so of the data is decided. If the data is normal, the step P222 makes a decision, that D3 is under the dual state. When this decision is made, the receiving switch SA2 is changed over to be connected to the side of its own system A through the step P224. Processing in the program PXI is performed as mentioned above, when the system is sound. If defect appears in the data from D3, ths step P226 makes a decision that D3 is abnormal, and then the switch SA2 is changed over through the STEP P228. By so doing, D2 becomes noticeable to information transmitted from D3. If D3 is under the single mode operation with CB3 only, it is decided through the next processing in the step P220 that the data is normal due to receiving from the B system, and then the flow shifts to the step P222. Since the signal from D3 indicates that D3 is not under the dual state, the flow shifts directly from the step P222 to the step P230 and SA2 is held in the B system. In this connection, upon switching to the B system transmitting of signals to the system buses is blocked through the step P254 shown in Fig. 7. If both CA3 and CB3 in D3 falls into the down state, SA2 is changed over to the A system side through the next processing in the step P228 and thereafter SA2 is alternately changed over to the A or B system side until either one system will be restored.

With both CA3 and CB3 falling into the down state, SA2 and SB2 make the switching of receiving alternately, but there occur no trouble in starting of D2 and output processing by D2 for the objectives to be controlled, as far as D1 remains under the dual state. When D3 is restored to the dual state, SA2 is changed over to the A system side through the route from the step P220 to P224 via P222, and thereafter the normal processing is performed again.

Processing in CA2 with CB2 falling into abnormal state

In Fig. 6, the processing route in CA2 is changed with CB2 falling in the abnormal state only in that output for the single mode operation is unused through the route from P234 to P236, while output for the dual mode operation has been issued through the route from P234 to P240. More specifically, the dual state of D2 can be confirmed, for example, through sending/receiving of the command signal C1 or the response signal R1 and by using the RUN monitoring lines YA2 and YB2, and then output in the A system is directly imparted to the controlled objectives in the step P240, although AND output of both systems has been issued in the dual operation mode.

Processing when restoring

Now assuming that one CPU falling in the down state is restored when D2 is under the single mode operation with the other CPU, it is required to transfer the data within the CPU from the normal side to the restored side and this is effected through the bus E2. The step P238 in Fig. 6 has a function to transfer the data to the restored CPU and the contents of the transferred data are different between CA2 and CB2. Moreover, the CPU on the restored side includes a program used for receiving the data, which program is not shown in Fig. 6.

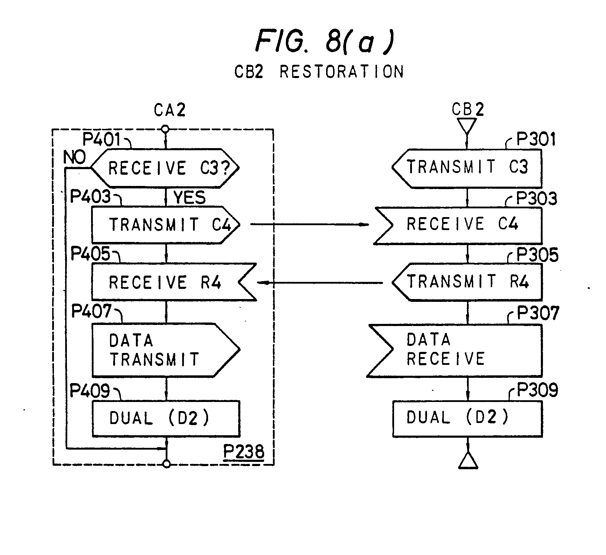

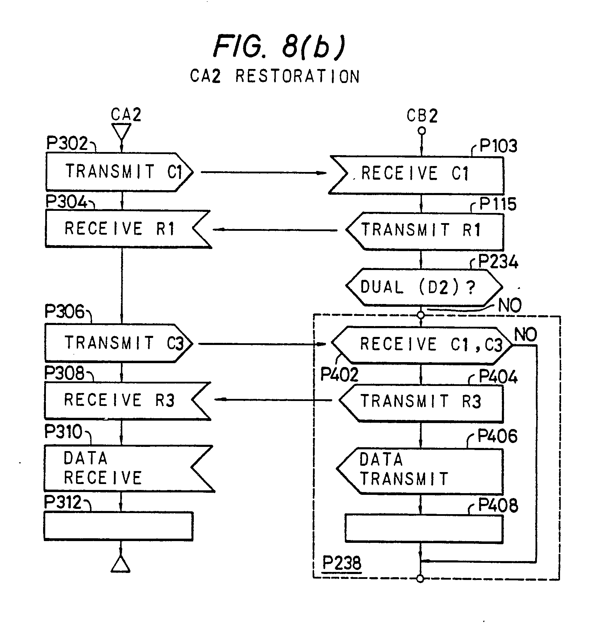

Fig. 8 shows the contents of the respective programs when restoring, and Fig. 8(a) shows the case CB2 is restored, while Fig. 8(b) shows the case CA2 is restored. Referring to Fig. 8(a), the right-hand half relates to a chart for CB2 and the left-hand half relates to a chart for CA2. When brought into the operation state, this program is executed in CB2 with priority and then a command signal C2 is first sent out in the step P301. The signal C3 is stored in CA2 and conformation of receiving C3 is made in the step P401 within P238 shown in Fig. 6. If this information is not made, the flow shifts directly to the step P240 where output for the single mode operation is performed. When receiving of C3 is confirmed, a command signal C4 is transmitted and received through the steps P403, P405 in CAS and the steps P303, P305 in CB2 using the bus E2, respectively, and then a response signal R4 is transmitted and received reversely, thus effecting the synchronization. On the normal side, after these confirmations CA2 sents out the data stored in itself to CB2 through the bus E2. After completion of the data transfer, the flag indicating the dual state is set in the steps P309 and P409 and then both CA2 and CB2 come into the processing shown in Fig. 6, so that the operation turns to a dual mode.

In the case of restoring CA2, the program on the left-hand half in Fig. 8(b) is selected in CA2 with priority when brought into the operation state, and the command signal C1 is sent out in the step P302. Transmitting of the signal C1 from CA2 is detected by the step P103 within the step P232 of CB2, while CB2 sends out the response signal R1 in the step P115. Receiving of the signal R1 is detected by the step P304 in CA2. On the CB2 side, the flow shifts from P115 to P234 to decide whether D2 is under the dual state or not, and then it comes into the step P238 until the flag indicating the dual state will be set. On the CA2 side, after confirmation of receiving R1 the command signal C3 is transmitted therefrom in the step P306. CB2 receives the signal C3 in the step P402 and then transmits the response signal R4 in the step P404. When CA2 receives the signal R4 in the step P308, synchronization between both CA2 and CB2 is effected. Then, the data is transmitted in the step P406 from the normal side CB2 through the bus E2 and thus transmitted data is received by CA2 in the step P310. After completion of the data transfer, the flag indicating the dual state is set in the steps P408 and P312. Besides, if C1 and C3 are not received by CB2 in the step P402, the processing through the steps P404, P406 and P408 is not performed and hence the flow shifts to the step P240. Upon decision of the dual state, both restoration mode and single mode are duly released.

Abnormal transmitting to system bus

The processing subsequent to the step P256 in Fig. 7 is to detect an anomaly in transmitting to the system bus. Condition of transmitting with the step P256 is monitored by the step P258 for a predetermined period of time which is set by the step P260. If any signal is not received during such predetermined period of time, a decision that there occurs an anomaly in transmitting is made and then the receiving switch SA2 is changed over to the side of the other system B in the step P264.

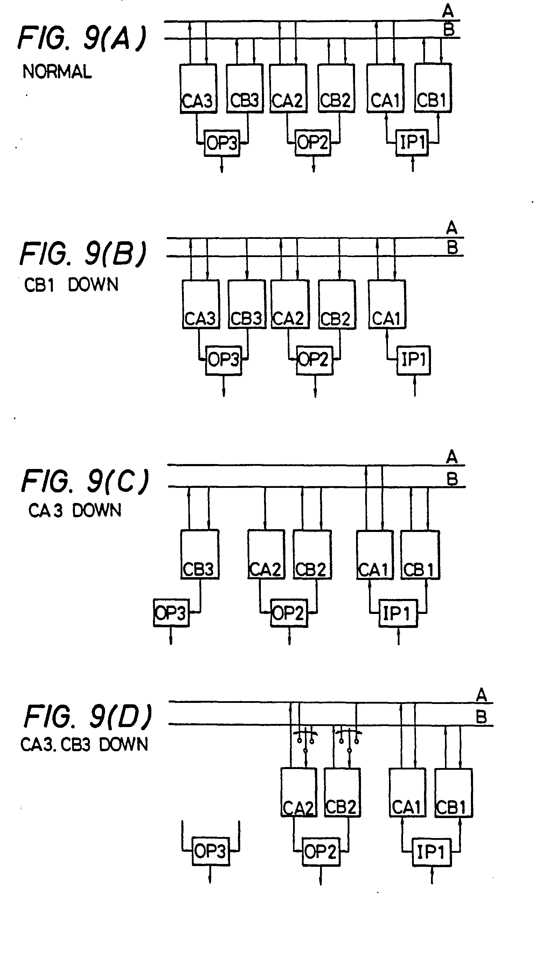

Fig. 9 shows how the entire system continues its operation in response to various anomalies, when the units D1, D2 and D3 are controlled as fully described in the above. Summary of the present invention will be now described by referring to Fig. 9.

First, Fig. 9(A), shows the case that the entire system is in the normal state, and transmitting from and receiving by CA1, CA2 and CA3 are performed with respect to the bus A, while transmitting from and receiving by CB1, CB2 and CB3 are performed with respect to the bus B. D1, D2 and D3 perform input and output in a dual mode. In the drawing, arrows indicate the direction of signal transmitting Fig. 9(B) shows the case that CB1 falls into the down state. In this case, CB2 and CB3 receives signals from the bus A and D2 and D3 are held in a dual mode to issue outputs to the controlled objectives, while signal transmitting to the system bus B is not performed. Fig. 9(C) shows the case that CA3 falls into the down state and then D3 is under the single mode operation with CB3 only. D2 remains in a dual mode, but CA2 is switched to receive signals from the system bus B. Fig. 9(D) shows the case that both CA3 and CB3 fall in the shutdown at the same time. In this case, CA2 and CB2 are switched to receive signals from either the system bus A or B alternatively, but D2 remains under the dual mode operation irrespective of the receiving bus as far as D1 continues to perform the dual mode operation. Moreover, the state shown in Fig. 9(B) is also caused in such a case that signals from D1 can not be obtained for some reason, in addition to the case that CB1 falls into the down state. Fig. 9 shows several states which are like to occur with ease relatively. In addition to such states, it may be caused that D1 falls into the down state, or that there occur anomalies at two (or three) locations far apart simultaneously. With D1 falling in the down state. It is not avoidable for the system to be brought into the shutdown, but this problem can be coped by improving the reliability of D1. Probability of the latter case, that is, simultaneous troubles at different locations, is extremely low and there occurs no problem substantially. If such case should be occurred, D1, D2 and D3 are able to continue their operations in a single mode.

**Claims**

1. A multicomputer system comprising:
   dual system buses (A, B),
   plural sets of dual units ($D_1$, $D_2$, $D_3$), each of which consists of two computers ($CA_1$, $CB_1$; $CA_2$, $CB_2$, $CA_3$, $CB_3$) which are effectively connected to each of said system buses (A, B) and which carry out identical processing,
   characterized in that:
   at least one ($D_1$) of the dual units includes an information exchange (bus ($E_1$) provided between the two computers ($CA_1$, $CB_1$),
   the first computer ($CA_1$) in said one ($D_1$) of the dual units sends a command signal ($C_1$) to the second computer ($CB_1$) of said dual unit ($D_1$) through said information exchange bus ($E_1$),
   the second computer ($CB_1$) sends a response signal ($R_1$) to the first computer ($CA_1$) through said information exchange bus ($E_1$) upon receiving said command signal,
   the first computer ($CA_1$) receives input signals and computes these signals immediately after receiving said response signal,
   at a predetermined time after sending the response signal the second computer ($CB_1$) receives input signals and computes signals, and that
   said predetermined time taking into account the transmission time of the response signal from the second computer ($CB_1$) to the first computer ($CA_1$) such that the first and second computers are synchronized, and that
   said first computer ($CA_1$) and said second computer ($CB_1$) send computed signals to the other dual units ($D_2$, $D_3$) through said system buses (A, B).

2. The multicomputer system of claim 1 characterized in that the first computer ($CA_1$) of said one dual unit ($D_1$) is started by a timer, and in that the second computer ($CB_1$) thereof is started by receiving the command signal ($C_1$) of said first computer ($CA_1$).

3. The multicomputer system of claim 1 or claim 2, characterized in that the computers ($CA_2$, $CB_2$; $CA_3$, $CB_3$) of the other dual units ($D_2$, $D_3$) are started by receiving the computed signals sent by said first ($CA_1$) and second ($CB_1$) computer.

4. The multicomputer system of any of the claims 1 to 3, characterized in that said at least one dual unit ($D_1$) sends synchronization signals at its output side.

5. The multicomputer system of any of the claims 1 to 3, characterized in that said other dual units (D₂, D₃) send synchronization signals at their respective output sides.

6. The multicomputer system of claim 4 or claim 5, characterized in that the computers (CA₂, CB₂; CA₃, CB₃) of said other dual units (D₂, D₃) do not compute when said one dual unit (D₁) sends computed signals to these other dual units (D₂, D₃).

7. The multicomputer system of any of the claims 1 to 6, characterized in that the respective computers (CA₂, CB₂; CA₃, CB₃) in said other dual units (D₂, D₃) are switched to receive signals from said system bus on the other system side, when it becomes incapable of receiving signals from said system bus on its own system side.

8. The multicomputer system according to claim 7, characterized in that transmitting of signals to said system but on its own system side is stopped when it becomes incapable of receiving signals from said system bus on its own system side.

9. The multicomputer system according to any of the claims 1 to 8, characterized in that when each dual unit (D₁, D₂, D₃) is under a dual mode, the respective computers add this information in signals transmitted to said system buses (A, B) and the respective computers receive signals from said system but (A, B) on their own system side with other dualized units being under a dual mode, and receive signals from the original system bus with other dual units not being under a dual mode.

10. The multicomputer system of any of the claims 1 to 9 characterized in that upon occurrence of restoration of the first computer in a dual unit the second computer thereof sends a dual signal to the other dual units (D₂, D₃), thereupon the computers in these other dual units switch to the system bus on their own system side.

11. The multicomputer system of any of the claims 1 to 10 characterized in that upon restoration of one computer in a dualized unit the data from the respective upper computer in said unit are transferred to the restored computer.

**Patentansprüche**

1. Mehrrechnersystem mit
zwei Systembussen (A, B),
mit einer Anzahl von Doppeleinheiten (D₁, D₂, D₃), von denen jede aus zwei Computern (CA₁, CB₁; CB₂; CA₃, CB₃) besteht, die wirksam mit jedem der Systembusse (A, B) verbunden sind und die identische Verarbeitung ausführen können,
dadurch gekennzeichnet, daß
wenigstens eine (D₁) der beiden Doppeleinheiten einen Informationsaustauschbus (E₁) enthält, der zwischen den beiden Computern (CA₁, CB₁) vorgesehen ist,
der erste Computer (CA₁) in der einen (D₁) der Doppeleinheiten ein Steuersignal (C₁) zu dem zweiten Computer (CB₁) der Doppeleinheit (D₁) über den Informationsaustauschbus (E₁) sendet,

der zweite Computer (CB₁) ein Antwortsignal (R₁) zudem ersten Computer (CA₁) über den Informationsaustauschbus (E₁) sendet, nach dem er das Steuersignal erhalten hat,

daß der erste Computer (CA₁) Eingangssignale empfängt und diese Signale unmittelbar nach Empfang des Antwortsignals verarbeitet,

daß der zweite Computer (CB₁) eine vorgegebene Zeit nach dem Senden des Antwortsignals die Eingangssignale empfängt und sie verarbeitet,

wobei diese vorgegebene Zeit der Übertragungszeit des Antwortsignals von dem zweiten Computer (CB₁) zu dem ersten Computer (CA₁) berücksichtigt, so daß der erste und der zweite Computer synchronisiert sind, und daß

der erste Computer (CA₁) und der zweite Computer (CB₁) verarbeitete Signale an die anderen Doppeleinheiten (D₂, D₃) über die Systembusse (A, B) sendet.

2. Mehrrechnersystem nach Anspruch 1, dadurch gekennzeichnet, daß der erste Computer (CA₁) der ersten Doppeleinheit (D₁) durch einen Zeitgeber gestartet wird, und daß ihr zweiter Computer (CB₁) beim Empfang des Steuersignals (C₁) des ersten Computers CA₁) gestartet wird.

3. Mehrrechnersystem nach Anspruch 1 oder 2, dadurch gekennzeichnet, daß die Computer (CA₂, CB₂; CA₃, CB₃) der anderen Doppeleinheiten (D₂, D₃) beim Empfang der verarbeiteten Signale gestartet werden, die von dem ersten (CA₁) und dem zweiten (CB₁) Komputer gesendet werden.

4. Mehrrechnersystem nach einem der Ansprüche 1 bis 3, dadurch gekennzeichnet, daß wenigstens eine Doppeleinheit (D₁) an ihrer Ausgangsseite Synchronisationssignale aussendet.

5. Mehrrechnersystem nach einem der Ansprüche 1 bis 3, dadurch gekennzeichnet, daß die anderen Doppeleinheiten (D₂, D₃ an ihren jeweiligen Ausgangsseiten Synchronisationssignale aussenden.

6. Mehrrechnersystem nach Anspruch 4 oder 5, dadurch gekennzeichnet, daß die Computer (CA₂, CB₂; CA₃, CB₃) der anderen Doppeleinheiten (D₂, D₃) keine Verarbeitung ausführen, wenn die eine Doppeleinheit (D₁) verarbeitet Signale zu diesen anderen Doppeleinheiten (D₂, D₃) sendet.

7. Mehrrechnersystem nach einem der Ansprüche 1 bis 6, dadurch gekennzeichnet, daß die jeweiligen Computer (CA₂, CB₂; CA₃, CB₃) in den andern Doppeleinheiten (D₂, D₃) so geschaltet werden, daß sie von dem Systembus an der anderen Systemseite Signale empfangen, wenn sie unfähig werden, Signale von dem Systembus auf der eigenen Systemseite zu empfagen.

8. Multirechnersystem nach Anspruch 7, dadurch gekennzeichnet, daß die Übertragung von Signalen zu dem Systembus auf der eigenen Systemseite angehalten wird, wenn es unmöglich wird, Signale von dem Systembus auf der eigenen Systemseite zu empfagen.

9. Mehrrechnersystem nach einem der Ansprüche 1 bis 8, dadurch gekennzeichnet, daß dann, wenn jede Doppeleinheit (D₁, D₂, D₃) sich in einem Doppelmode befindet, die jeweiligen Computer diese Information in Signale addieren, die zu den Systembussen (A, B) übertragen werden, und die jeweiligen Computer Signale von dem Systembus (A, B) auf der eigenen Systemseite mit anderen Doppeleinheiten, die sich im Doppelmode befinden, empfangen, und Signale von dem Original-Systembus mit anderen Doppeleinheiten empfangen, die nicht im Doppelmode sind.

10. Mehrrechnersystem nach einem der Ansprüche 1 bis 9, dadurch gekennzeichnet, daß beim Auftreten einer Wiederherstellung des ersten Computers in einer Doppeleinheit deren zweiter Computer ein Doppelsignal zu den anderen Doppeleinheiten ($D_2$, $D_3$, sendet, woraufhin die Computer in diesem amderen Doppeleinheiten auf den Systembus auf der eigenen Systemseite umschalten.

11. Multicomputersystem nach einem der Ansprüche 1 bis 10, dadurch gekennzeichnet, daß bei Wiederherstellung von einem Computer in einer Doppeleinheit die Daten von dem jeweilig oberen Computer in dieser Einheit zu dem wiederhergestellten Computer übertraghen werden.

**Revendications**

1. Système à ordinateurs multiples comportant deux bus système (A, B),
une pluralité d'ensembles d'unités doubles (D1, D2, D3), dont chacune est constituée de deux ordinateurs (CA1, CB1; CA2, CB2; CA3, CB3), qui sont raccordés effectivement à chacun desdits bus système (A, B) et exécutent un traitement identique,
caractérisé en ce que
au moins l'une (D1) des unités doubles comporte un bus d'échange d'informations (E1) prévu entre les deux ordinateurs (CA1, CB1),
le premier ordinateur (CA1) situé dans l'une (D1) des unités doubles envoie un signal de commande (C1) au second ordinateur (CB1) de ladite unité double (D1) par l'intermédiaire dudit bus (E1) d'échange d'informations,
le second ordinateur (CB1) envoie un signal de réponse (R1) au premier ordinateur (CA1) par l'intermédiaire dudit bus d'échange d'informations (E1), lors de la réception dudit signal de commande,
le premier ordinateur (CA1) reçoit des signaux d'entrée et traite ces signaux aussitôt après avoir reçu ledit signal de réponse,
au bout d'un intervalle de temps prédéterminé après l'émission du signal de réponse, le second ordinateur (CB1) reçoit des signaux d'entrée et traite des signaux,
ledit intervalle de temps prédéterminé tenant compte de l'intervalle de temps de transmission du signal de réponse du second ordinateur (CB1) au premier ordinateur (CA1) de sorte que les premier et second ordinateurs sont synchronisés, et que
ledit premier ordinateur (CA1) et ledit second ordinateur (CB1) envoient des signaux traités aux autres unités doubles (D2, D3) par l'intermédiaire desdits bus système (A, B).

2. Système à ordinateurs multiples selon la revendication 1, caractérisé en ce que le premier ordinateur (C1) de ladite unité double (D1) est déclenché par une horloge et que le second ordinateur (CB1) de cette unité est déclenché par la réception du signal de commande (C1) dudit premier ordinateur (CA1).

3. Système à ordinateurs multiples selon la revendication 1 ou 2, caractérisé en ce que les ordinateurs (CA2, CB2; CA3, CB3) des autres unités doubles (D2, D3) sont déclenchés par la réception dss signaux traités envoyés par ledit premier ordinateur (CA1) et ledit second ordinateur (CB1).

4. Système à ordinateurs multiples selon l'une quelconque des revendications 1 à 3, caractérisé en ce qu'au moins ladite unité double (D1) émet des signaux de synchronisation sur son côté sortie.

5. Système à ordinateurs multiples selon l'une quelconque des revendications 1 à 3, caractérisé en ce que lesdites autres unités doubles (D2, D3) émettent des signaux de synchronisation sur leurs côtés sorties respectifs.

6. Système à ordinateurs multiples selon la revendication 4 ou 5, caractérisé en ce que les ordinateurs (CA2, CB2; CA3, CB3) desdites autres unités doubles (D2, D3) n'exécutent aucun calcul lorsque ladite unité double (D1) envoie des signaux traités à ces autres unités double (D2, D3).

7. Système à ordinateurs multiples selon l'une quelconque des revendications 1 à 6, caractérisé en ce que les ordinateurs respectifs (CA2, CB2; CA3, CB3) situés dans lesdits autres unités doubles (D2, D3) sont commutés pour la réception de signaux en provenance dudit bus système situé sur l'autre côté du système, lorsque la réception de signaux à partir dudit bus système sur son propre côté système devient impossible.

8. Système à ordinateurs multiples selon la revendication 7, caractérisé en ce que l'envoi de signaux audit bus système sur son propre côté système est arrêté lorsque la réception de signaux de réception en provenance dudit bus système devient impossible sur son propre côté système.

9. Système à ordinateurs multiples selon l'une quelconque des revendications 1 à 8, caractérisé en ce que, lorsque chaque unité double (D1, D2, D3) fonctionne selon un mode double, les ordinateurs respectifs ajoutent cette information dans des signaux envoyés auxdits bus système (A, B) et les ordinateurs respectifs reçoivent des signaux en provenance dudit bus système (A, B) sur leur propre côté système alors que d'autres unités doublées fonctionnent selon un mode double, et reçoivent des signaux en provenance du bus système initial alors que d'autres unités doubles ne fonctionnent pas selon un mode double.

10. Système à ordinateurs multiples selon l'une quelconque des revendications 1 à 9, caractérisé en ce que, lors de l'apparition d'une régénération du premier ordinateur dans une unité double, le second ordinateur de cette unité envoie aux autres unités doubles (D2, D3), un signal double, lors de l'arrivée duquel les ordinateurs situés dans ces autres unités doubles sont commutés sur le bus système, sur leur propre côté système.

11. Système à ordinateurs multiples selon l'une quelconque des revendications 1 à 10, caractérisé en ce que, lors de la régénération d'un ordinateur dans une unité doublée, les données provenant de l'ordinateur supérieur respectif situé dans ladite unité sont transmises à l'ordinateur régénéré.

*FIG. 1*

EP 0 081 238 B1

# FIG. 2 (a)

# FIG. 2(b)

## FIG. 3

FLOW OF DUAL MODE

CA 1
START BY TIMER

CB 1
START BY RECEIVE C₁

P3 — TRANSMIR C₁ ----C₁----→ RECEIVE C₁ — P103

P5 — RECEIVE R₁ ←----R₁---- TRANSMIT R₁ — P115

SYNCHRO-NOUS

PI — DATA INPUT ⟺ DATA INPUT — PII

P45 — ARITHMETIC        ARITHMETIC — P141

P47 — TRANSMIT C₂ ----C₂----→ RECEIVE C₂ — P143

P49 — RECEIVE R₂ ←----R₂---- TRANSMIT R₂ — P155

SYNCHRO-NOUS

PIII — DATA OUTPUT ⟺ DATA OUTPUT — PIV

FIG. 4(a)
CA1 DOWN

FIG. 4(b)
CB1 DOWN

EP 0 081 238 B1

FIG. 5

# FIG. 6

START

P200 — RECEIVE? — NO

YES

P210 — DUAL(D1)? — YES → P212

P212 — RECEIVE FROM A(B)

NO

PX

P202 — TIMER OUTPUT? — NO

YES

P204 — RECEIVE FROM B(A)? — YES

NO

P206 — TIMER RESET / RECEIVE FROM B(A)

P208 — SYSTEM DOWN

P214 — RECEIVE FROM D1? — NO

YES

P244 — INPUT MEMORY

P216 — TIMER RESET

P218 — DIGITAL INPUT? — ANALOG

DIGITAL

PXI

P220 — DATA FROM D NORMAL? — YES / NO

P222 — DUAL(D3)? — YES

NO

P224 — RECEIVE FROM A(B)

P226 — D3 ABNORMAL

P228 — SA2 CHANGE

P246 — TRANSMIT TO SYSTEM BUS SEE FIG.7

P230 — INPUT MEMORY & ARITHMETIC

P232 — SYNCHRONOUS A(P3,P5),B(P103,P115)

P234 — DUAL(D2)? — YES / NO

P236 — OUTPUT (DUAL)

P238

P240 — OUTPUT (SINGLE)

END

EP 0 081 238 B1

# FIG. 7

P218 (ANALOG)

8

## FIG. 8(a)

CB2 RESTORATION

CA2 / CB2

P401 — RECEIVE C3? (NO)

P301 — TRANSMIT C3

P403 — TRANSMIT C4 (YES) → P303 — RECEIVE C4

P405 — RECEIVE R4 ← P305 — TRANSMIT R4

P407 — DATA TRANSMIT / P307 — DATA RECEIVE

P409 — DUAL (D2) / P309 — DUAL (D2)

P238

## FIG. 8(b)
### CA2 RESTORATION

CA2

P302 — TRANSMIT C1

P304 — RECEIVE R1

P306 — TRANSMIT C3

P308 — RECEIVE R3

P310 — DATA RECEIVE

P312 —

CB2

P103 — RECEIVE C1

P115 — TRANSMIT R1

P234 — DUAL (D2) ? NO

P402 — RECEIVE C1,C3 NO

P404 — TRANSMIT R3

P406 — DATA TRANSMIT

P408 —

P238

FIG. 9(A)
NORMAL

FIG. 9(B)
CB1 DOWN

FIG. 9(C)
CA3 DOWN

FIG. 9(D)
CA3. CB3 DOWN